# EUROPÄISCHE PATENTANMELDUNG

(11) **EP 1 538 413 A2**
(43) Veröffentlichungstag der Anmeldung: **08.06.2005**
(21) Anmeldenummer: 04028868.0
(22) Anmeldetag: 06.12.2004
(51) Int. Cl.: F28D 20/00, F28D 1/047, F24H 7/00

(54) **Natursteinheizkörper und Herstellungsverfahren dafür**

(30) Priorität: 04.12.2003 DE 20318816 U
(71) Anmelder: Fritz Hiller jun., 92331 Parsberg (DE)
(72) Erfinder: Fritz Hiller jun., 92331 Parsberg (DE)
(74) Vertreter: Lindner, Manfred Klaus, Dipl.-Phys.

(57) **Zusammenfassung**

Die Erfindung betrifft einen Natursteinheizkörper (1) mit wenigstens einem Natursteinplattenelement (2) und einem Heizrohrsystem (3), das mit dem Natursteinplattenelement (2) in Kontakt ist und durch das eine Heizflüssigkeit geleitet ist, wobei das Natursteinplattenelement (2) auf einer Seite (Rückseite 9) wenigstens eine nutartige oder flächige Ausnehmung (5) enthält, in der das Heizrohrsystem (3) zumindest teilweise aufgenommen ist. Ferner betrifft die Erfindung ein Herstellungsverfahren für einen Natursteinheizkörper (1) mit folgenden Schritten:
auf einer Seite (Rückseite 9) eines Natursteinplattenelementes (2) wird wenigstens eine Ausnehmung (5) eingebracht,
ein Heizrohrsystem (3) wird zumindest teilweise in dieser wenigstens einen Ausnehmungen (5) untergebracht, und
vor oder nach dem Unterbringen des Heizrohrsystems (3) in der Ausnehmung (5) wird eine Gussmasse (6) in die Ausnehmung (5) gegeben.

## Beschreibung

Die Erfindung betrifft Natursteinheizkörper und Herstellungsverfahren dafür.

Beispielsweise aus den Veröffentlichungen DE 200 05 104 U1 und DE 202 08 007 U1 sind Natursteinheizkörper bekannt, die wenigstens ein Natursteinplattenelement und ein Heizrohrsystem enthalten, das mit dem Natursteinplattenelement in Kontakt ist und durch das eine Heizflüssigkeit geleitet ist.

Bei dem Flächenheizkörper aus Naturstein gemäß der
DE 200 05 104 U1 ist das Heizrohrsystem so zwischen zwei Natursteinplattenelementen angeordnet, dass ein Konvektionsheizkörper gebildet ist. Einerseits ist dieser Konvektionseffekt nicht optimal, da dabei z.B. auch immer Staubteilchen mit transportiert werden, und andererseits verbraucht der Konvektionseffekt-Aufbau aus dem Heizrohrsystem Wärme, die nicht mehr jedenfalls an das raumseitige Natursteinplattenelement abgegeben werden kann, so dass dessen Wirkung als Wärme abstrahlende Platte geringer oder der Wärmebedarf aus dem Heizrohrsystem höher ist. Dieser Stand der Technik stellt damit eine recht unbefriedigende Lösung dar.

Der Natursteinheizkörper gemäß der DE 202 08 007 U1 enthält ein Heizrohrsystem, das in ein Epoxydharz eingegossen und darüber mit dem Natursteinplattenelement in Verbindung ist. Das Heizrohrsystem ist somit entgegen den Angaben in der
DE 202 08 007 U1 nicht in das Natursteinplattenelement eingearbeitet, sondern zusammen mit dem Epoxydharzverguss flächig damit verbunden. Durch diese Bauweise wird zum einen Wärmeenergie vergeudet, um den Epoxydharzverguss des Heizrohrsystems und somit letztlich einen sehr voluminösen Aufbau zu erwärmen, und zum anderen durch den Übergang zwischen dem Epoxydharz und dem Naturstein.

Die vorliegende Erfindung hat und erreicht das Ziel, einen möglichst effizienten Natursteinheizkörper sowie ein Herstellungsverfahren dafür zu schaffen.

Ein erfindungsgemäßer Natursteinheizkörper enthält somit wenigstens ein Natursteinplattenelement und ein Heizrohrsystem, das mit dem Natursteinplattenelement in Kontakt ist und durch das eine Heizflüssigkeit geleitet ist, wobei das Natursteinplattenelement auf einer Seite wenigstens eine nutartige oder flächige Ausnehmung enthält, in der das Heizrohrsystem zumindest teilweise aufgenommen ist, und wobei das Heizrohrsystem mit Vorzug über eine Gussmasse mit dem Natursteinplattenelement in Kontakt ist.

Bei der Seite mit den/der Ausnehmung(en) handelt es sich üblicherweise um die sogenannte Rückseite des Natursteinheizkörpers, im Gegensatz zu seiner Sichtseite.

Vorzugsweise ist jede Ausnehmung ein Schnitt oder eine Ausfräsung mit ausreichender Breite zur Aufnahme jeweils eines Rohres des Heizrohrsystems. Bevorzugt enthält das Heizrohrsystem wenigstens ein Rohr oder Rohrelement, das gerade oder gebogen, insbesondere ein- oder mehrfach S-förmig gebogen ist, oder eine Gitterstruktur aus einer Mehrzahl von Rohren. Es ist weiter bevorzugt, wenn die Gussmasse zumindest weitgehend und insbesondere vollständig ausgehärtet ist.

Bei Weiterbildungen der Erfindung enthält das Heizrohrsystem wenigstens eine Fluidleitung, die rohrartig ist und vorzugsweise zumindest im wesentlichen aus Kupfer, Stahl, Edelstahl oder PVC besteht. Weiterhin ist es bevorzugt, wenn das Heizrohrsystem Zuleitungs- und Ableitungsanschlüsse für ein Wärmeträgerfluid und/oder Zuleitungssteuer- und/oder -regeleinrichtungen aufweist, die selbst Wärmesensoren enthalten können oder denen Wärmesensoren an oder in dem Natursteinplattenelement oder in einem Abstand davon zugeordnet sind. Insbesondere Wärmesensoren an oder in dem Natursteinplattenelement ermöglichen eine Berücksichtigung der Wärmekapazität, Restwärme und dergleichen des Natursteinplattenelementes und somit eine effiziente Heizsteuerung und/oder -regelung.

Weiterhin ist es bevorzugt, wenn das Heizrohrsystem wenigstens eine rohrartige Fluidleitung enthält, die zumindest im wesentlichen und besonders bevorzugt vollständig innerhalb der Außenkontur des Natursteinplattenelementes liegt. Anders ausgedrückt ist jede Ausnehmung von einer solchen Tiefe, dass die zugehörige rohrartige Fluidleitung zumindest im wesentlichen und insbesondere vollständig darin untergebracht ist. Alternativ oder zusätzlich kann jeder solche Schnitt oder jede Ausfräsung zur Bildung von Hinterschneidungen schräg sein oder eine entsprechende Querschnittsform aufweisen, so dass die zugehörige rohrartige Fluidleitung zumindest teilweise hinter der Hinterschneidung liegt.

Ferner kann vorgesehen sein, dass der Natursteinheizkörper ein Abdeckelement enthält, das auf der Seite der wenigstens einen Ausnehmung an dem Natursteinplattenelement angeordnet ist, wobei das Abdeckelement vorzugsweise aus Naturstein besteht, eine Wärmeisolierung enthält oder bildet und/oder Befestigungseinrichtungen für seine Montage und/oder die Montage des Natursteinplattenelementes an ihm aufweist.

Bei dem Herstellungsverfahren für einen Natursteinheizkörper ist gemäß der Erfindung vorgesehen, dass auf einer Seite eines Natursteinplattenelementes wenigstens eine Ausnehmung eingebracht wird, dass ein Heizrohrsystem zumindest teilweise in dieser wenigstens einen Ausnehmung untergebracht wird, und dass vor oder nach dem Unterbringen des Heizrohrsystems in der Ausnehmung eine Gussmasse in die Ausnehmung gegeben wird. Es ist bevorzugt, dass jede Ausnehmung durch Schneiden oder Fräsen auf der einen Seite des Natursteinplattenelementes hergestellt wird. Bei der Seite mit den/der Ausnehmung(en) handelt es sich üblicherweise um die sogenannte Rückseite des Natursteinheizkörpers, im Gegensatz zu seiner Sichtseite.

Soweit vorstehend und/oder in den Ansprüchen Alternativen aufgezeigt sind, ist in jeder dieser Alternativen für sich eine vorzugsweise Ausgestaltung zu sehen, die auch für sich alleine betrachtet, d.h. unabhängig von den einzelnen anderen Alternativen als schützenswert erachtet wird. Insbesondere lässt sich die Erfindung auch auf einzelne Alternativen beschränken, d.h. unabhängig von anderen Alternativen und Kombinationen damit zum Gegenstand selbständiger und abhängiger Ansprüche machen.

Vorzugsweise Weiterbildungen der Erfindung insgesamt ergeben sich aus den Ansprüchen sowie deren Kombinationen und im übrigen aus der Gesamtheit der vorliegenden Unterlagen.

Die Erfindung wird nachfolgend anhand von Ausführungsbeispielen auch unter Bezugnahme auf die begleitenden Zeichnungen lediglich exemplarisch näher beschrieben, in denen
- Fig. 1: eine schematische Rückseitenansicht eines ersten Ausführungsbeispiels eines Natursteinheizkörpers,
- Fig. 2: eine schematische Schnittansicht des ersten Ausführungsbeispiels des Natursteinheizkörpers nach der Fig. 1,
- Fig. 3: eine schematische Rückseitenansicht eines zweiten Ausführungsbeispiels eines Natursteinheizkörpers,
- Fig. 4: eine schematische Schnittansicht des zweiten Ausführungsbeispiels des Natursteinheizkörpers nach der Fig. 3,
- Fig. 5: eine schematische Rückseitenansicht eines dritten Ausführungsbeispiels eines Natursteinheizkörpers,
- Fig. 6: eine schematische Schnittansicht des dritten Ausführungsbeispiels des Natursteinheizkörpers nach der Fig. 5,
- Fig. 7: eine schematische Rückseitenansicht eines vierten Ausführungsbeispiels eines Natursteinheizkörpers,
- Fig. 8: eine schematische Schnittansicht des vierten Ausführungsbeispiels des Natursteinheizkörpers nach der Fig. 7,
- Fig. 9: eine schematische Rückseitenansicht eines fünften Ausführungsbeispiels eines Natursteinheizkörpers,
- Fig. 10: eine schematische Schnittansicht des fünften Ausführungsbeispiels des Natursteinheizkörpers nach der Fig. 9,
- Fig. 11: eine schematische Rückseitenansicht eines sechsten Ausführungsbeispiels eines Natursteinheizkörpers,
- Fig. 12: eine schematische Schnittansicht des sechsten Ausführungsbeispiels des Natursteinheizkörpers nach der Fig. 11,
- Fig. 13: eine schematische Rückseitenansicht eines siebten Ausführungsbeispiels eines Natursteinheizkörpers,
- Fig. 14: eine schematische Schnittansicht des siebten Ausführungsbeispiels des Natursteinheizkörpers nach der Fig. 11,
- Fig. 15: eine schematische Rückseitenansicht eines achten Ausführungsbeispiels eines Natursteinheizkörpers,
- Fig. 16: eine schematische Schnittansicht des achten Ausführungsbeispiels des Natursteinheizkörpers nach der Fig. 11, und
- Fig. 17: eine schematische Schnittansicht einer Einzelheit eines neunten Ausführungsbeispiels eines Natursteinheizkörpers.

Anhand der nachfolgend beschriebenen und in den Zeichnungen dargestellten Ausführungs- und Anwendungsbeispiele wird die Erfindung lediglich exemplarisch näher erläutert d.h. sie ist nicht auf diese Ausführungs- und Anwendungsbeispiele oder auf die jeweiligen Merkmalskombinationen innerhalb der Ausführungs- und Anwendungsbeispiele beschränkt. Verfahrens- und Vorrichtungsmerkmale ergeben sich jeweils analog auch aus Vorrichtungs- bzw. Verfahrensbeschreibungen.

Einzelne Merkmale, die im Zusammenhang mit konkreten Ausführungsbeispielen angeben und/oder dargestellt sind, sind nicht auf diese Ausführungsbeispiele oder die Kombination mit den übrigen Merkmalen dieser Ausführungsbeispiele beschränkt, sondern können im Rahmen des technisch Möglichen, mit jeglichen anderen Varianten, auch wenn sie in den vorliegenden Unterlagen nicht gesondert behandelt sind, kombiniert werden.

Anhand der Darstellungen in der Zeichnung werden auch solche Merkmale deutlich, die nicht mit Bezugszeichen versehen sind, unabhängig davon, ob solche Merkmale nachfolgend beschrieben sind oder nicht. Andererseits sind auch Merkmale, die in der vorliegenden Beschreibung enthalten, aber nicht in der Zeichnung sichtbar oder dargestellt sind, ohne weiteres für einen Fachmann verständlich.

Einzelne Ausgestaltungsmöglichkeiten und Varianten der Erfindung ergeben sich aus den vorherigen allgemeinen Darstellungen. Daraus ergeben sich zahlreiche Ausführungsbeispiele der vorliegenden Erfindung, und diese Ausführungsbeispiele aus den Merkmalskombinationen der vorherigen allgemeinen Darstellungen sind hiermit durch Bezugnahme auch Bestandteil der nun folgenden Befassung mit Ausführungsbeispielen.

Gleiche Bezugszeichen in den einzelnen Figuren und Abbildungen der Zeichnungen bezeichnen gleiche oder ähnliche oder gleich oder ähnlich wirkende Komponenten. Anhand der Darstellungen in der Zeichnung werden auch solche Merkmale deutlich, die nicht mit Bezugszeichen versehen sind, unabhängig davon, ob solche Merkmale nachfolgend beschrieben sind oder nicht. Andererseits sind auch Merkmale, die in der vorliegenden Beschreibung enthalten, aber nicht in der Zeichnung sichtbar oder dargestellt sind, ohne weiteres für einen Fachmann verständlich.

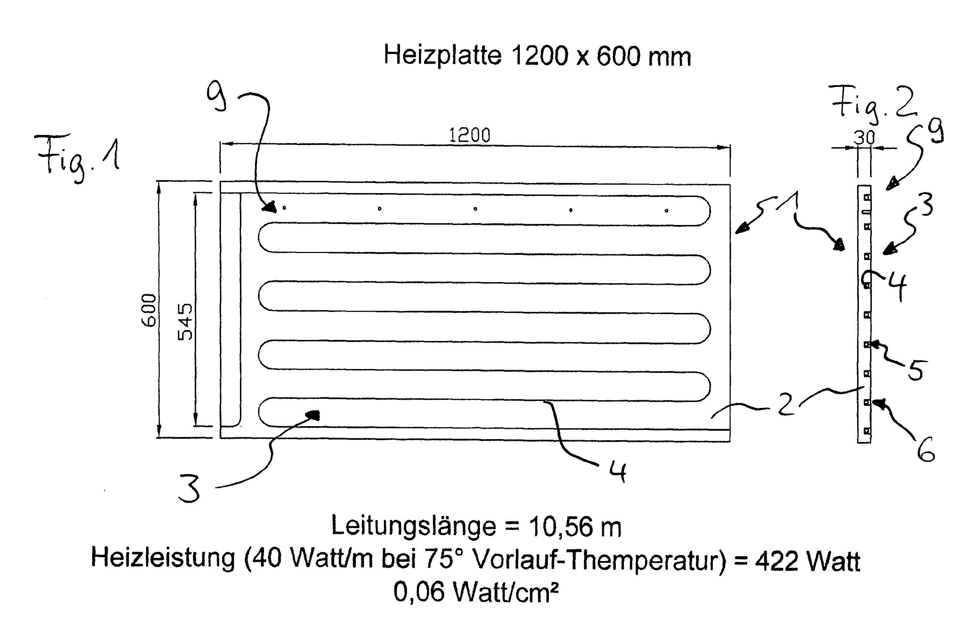

In den Fig. 1 bis 16 sind erste bis achte Ausführungsbeispiele eines Natursteinheizkörpers 1 in schematischen Rückansichten und Schnittansichten gezeigt. Die Abmessungsangaben in den Figuren sind, auch wenn es sich bei einzelnen Angaben um zumindest annähernd bevorzugte Werte handelt, lediglich als Beispiele zu verstehen. Insbesondere die Höhen- und Breitenabmessungen können entsprechend örtlichen Platzanforderungen gewählt werden. Auch die Leitungslängen- und Heizleistungsangaben sind lediglich als exemplarische Werte zu verstehen.

Jeder solche Natursteinheizkörper 1 enthält ein Natursteinplattenelement 2 und ein Heizrohrsystem 3. Letzteres weist ein Rohr 4 auf, das in einer Ausnehmung oder in Ausnehmungen 5 in dem Natursteinplattenelement 2 verlegt ist. Jede Ausnehmung 5 ist vorzugsweise so tief, dass das Rohr 4 oder die allgemein rohrartige Fluidleitung für ein Wärmeübertragungsfluid, wie beispielsweise Wasser, vollständig in den Ausnehmungen 5 aufgenommen ist.

Die Ausnehmungen 5 sind durch Schnitte gebildet und werden, nachdem das Rohr 4 darin eingelegt wurde, mit einer Gussmasse 6 gefüllt, die insbesondere vollständig aushärtet.

Die Fig. 1 bis 8 betreffen Ausgestaltungen, wie sie vorstehend beschrieben sind, und zwar

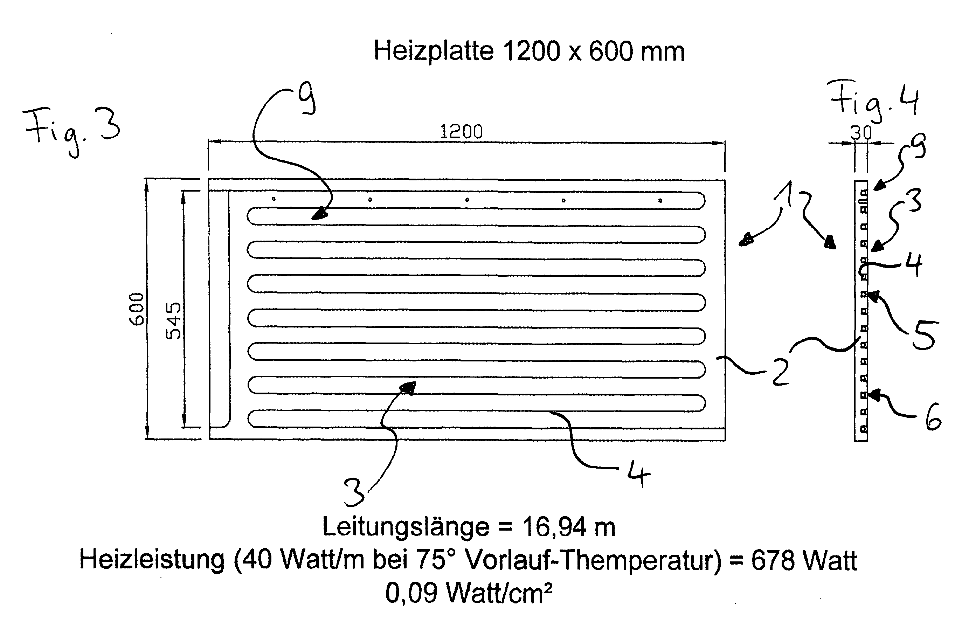

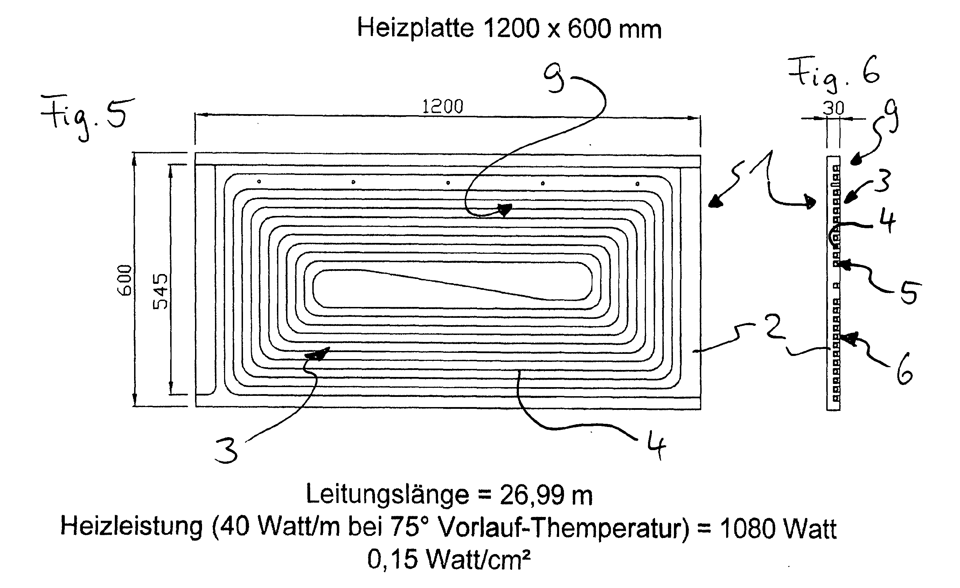

die Fig. 1 und 2 eine Ausgestaltung mit einem Heizsystem 3 mit einem mehrfach S-artig oder mäanderartig verlaufenden Rohr 4, die Fig. 3 und 4 eine Ausgestaltung mit einem Heizsystem 3 mit einem mehrfach S-artig oder mäanderartig verlaufenden Rohr 4, gegenüber der Version in den Fig. 1 und 2 mit höherer Anzahl von Biegungen im Verlauf des Rohrs 4 und damit höherer Leitungslänge und Leistung bei gleicher Heizkörperfläche,
die Fig. 5 und 6 eine Ausgestaltung mit einem Heizsystem 3 mit einem doppelt "gewickelt" verlaufenden Rohr 4, und

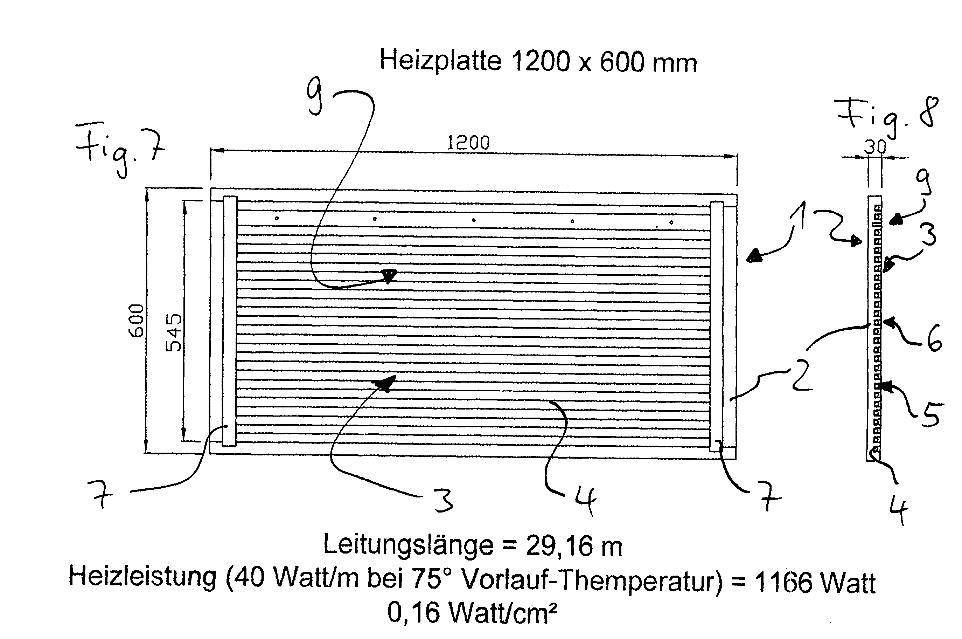

die Fig. 7 und 8 eine Ausgestaltung mit einem Heizsystem 3 mit einer Mehrzahl von parallelen Rohren 4, die an ihren Enden in Verbindungsleitungen 7 münden.

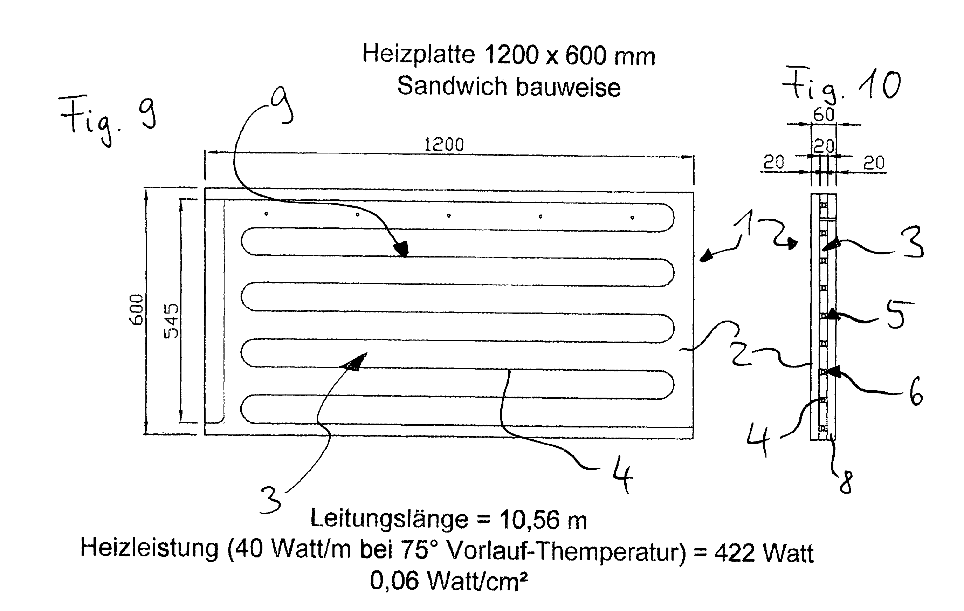

Bei den Ausgestaltungen gemäß den Fig. 9 bis 16 ist zusätzlich zu den Komponenten der Ausführungsbeispiele nach den Fig. 1 bis 8 noch ein Abdeckelement 8 vorgesehen. Damit sind die Ausnehmung(en) 4 in der Rückseite 9 des Natursteinplattenelementes 2 abgedeckt. Das Abdeckelement 8 kann beispielsweise aus Naturstein bestehen. Weiterhin kann es zusätzlich oder alternativ eine Wärmeisolierung enthalten oder bilden. Ferner kann das Abdeckelement 8 Befestigungseinrichtungen (nicht gezeigt) für seine Montage und/oder die Montage des Natursteinplattenelementes 2 an ihm aufweisen. Letzteres ermöglicht beispielsweise eine ortsfeste Anbringung des Abdeckelementes 8 und dann eine Montage des Natursteinplattenelementes 2 samt Heizsystem 3 daran. Die Fig. 9 bis 16 betreffen Ausgestaltungen, wie sie vorstehend mit dem Abdeckelement 8 beschrieben sind, und zwar
die Fig. 9 und 10 eine Ausgestaltung mit einem Heizsystem 3 mit einem mehrfach S-artig oder mäanderartig verlaufenden Rohr 4,

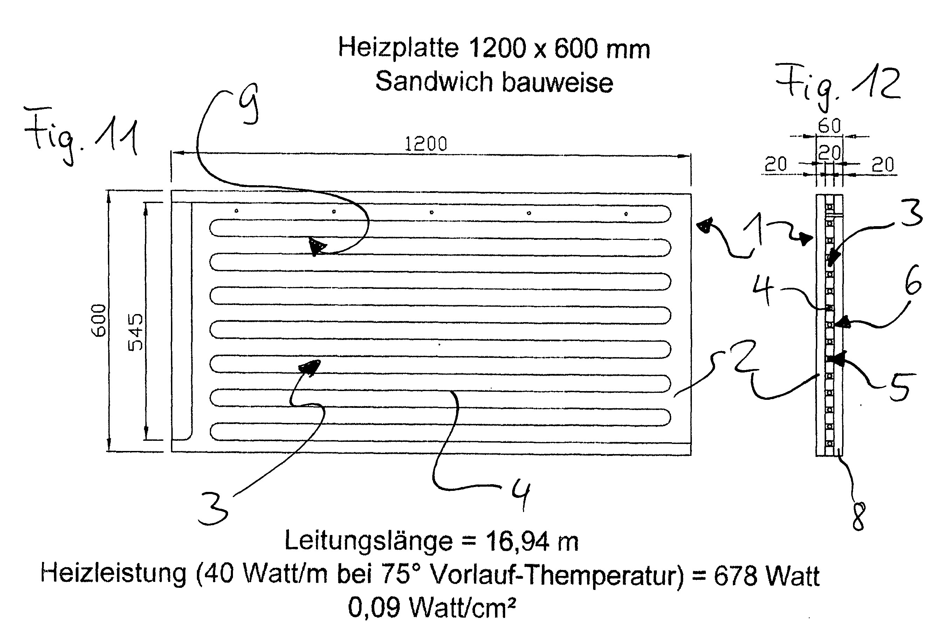

die Fig. 11 und 12 eine Ausgestaltung mit einem Heizsystem 3 mit einem mehrfach S-artig oder mäanderartig verlaufenden Rohr 4, gegenüber der Version in den Fig. 1 und 2 mit höherer Anzahl von Biegungen im Verlauf des Rohrs 4 und damit höherer Leitungslänge und Leistung bei gleicher Heizkörperfläche,

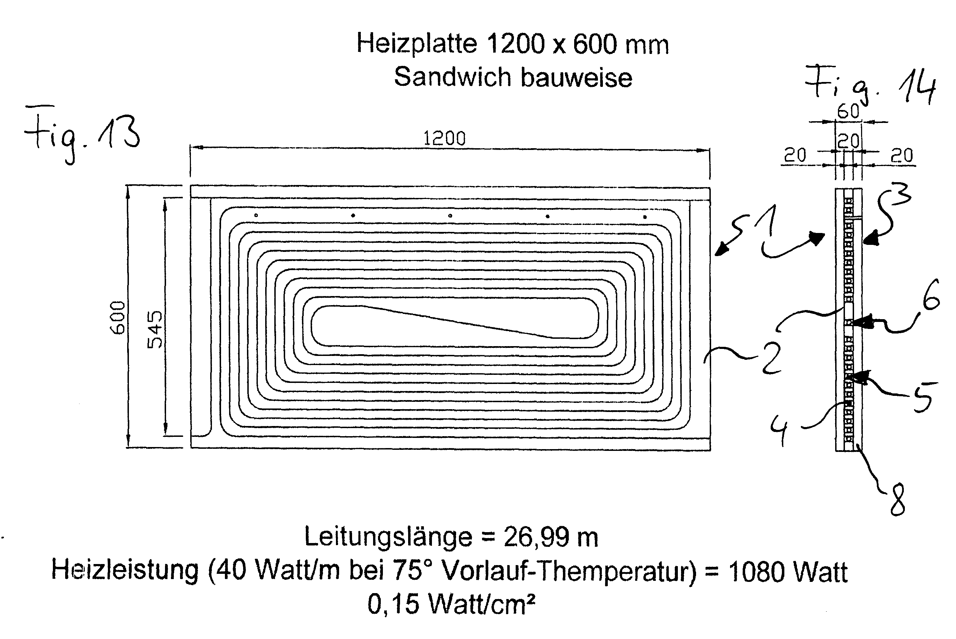

die Fig. 13 und 14 eine Ausgestaltung mit einem Heizsystem 3 mit einem doppelt "gewickelt" verlaufenden Rohr 4, und

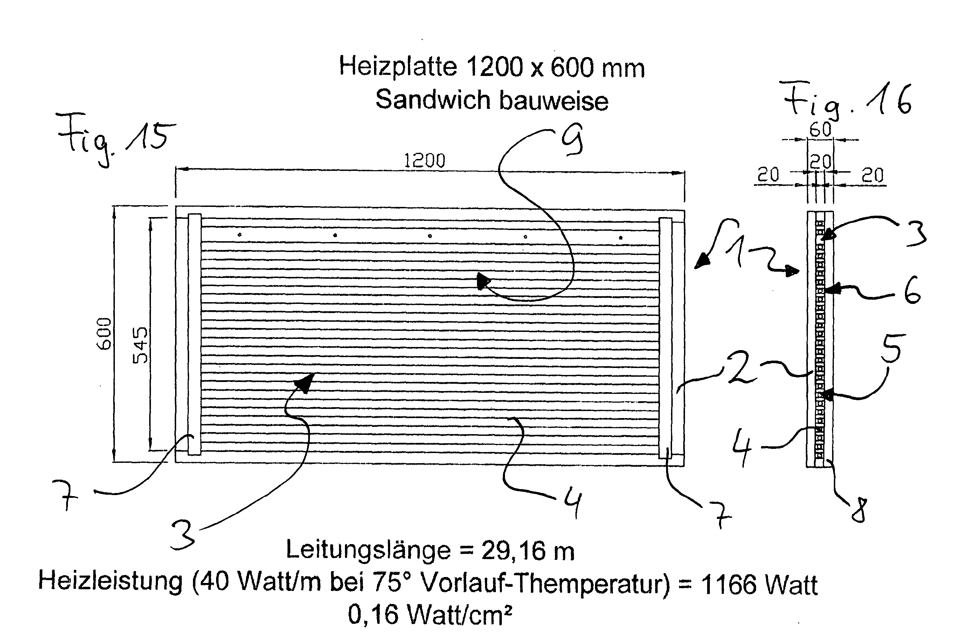

die Fig. 15 und 16 eine Ausgestaltung mit einem Heizsystem 3 mit einer Mehrzahl von parallelen Rohren 4, die an ihren Enden in Verbindungsleitungen 7 münden.

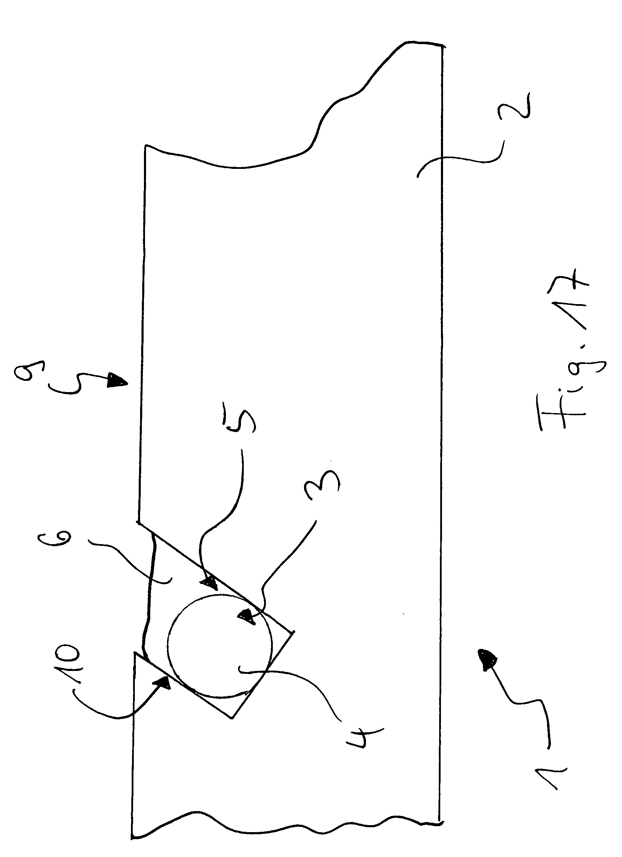

Noch eine weitere Ausgestaltungsmöglichkeit ist anhand einer schematischen teilweisen Querschnittsansicht in der Fig. 17 verdeutlicht. Wie leicht zu erkennen ist, verläuft die Ausnehmung 5 schräg in das Natursteinplattenelement 2 hinein, so dass eine Hinterschneidung 10 gebildet ist, die das Rohr 4 von der Rückseite 9 des Natursteinplattenelementes 2 teilweise überdeckt. Damit kann ein besonders intensiver Kontakt zwischen einerseits dem Heizsystem 3, genauer zwischen einerseits jedem seiner Rohre 4 und eventuell Verbindungsleitungen 7, und andererseits dem Natursteinplattenelement 2 erzielt werden.

Nachfolgend werden noch einige weitere Ausgestaltungen, Einzelmerkmale, Wirkungsweisen, Funktionen und Vorteile angegeben, die mit allen vorstehenden Ausführungsbeispielen zu kombinieren sind, soweit Merkmale nicht direkt konkurrieren.

Das Natursteinplattenelement 2 kann aus einer Natursteinplatte in jeglicher Stärke, Größe, Farbe und Form bestehen. Das Heizsystem 3 kann Rohre aus Kupfer, Stahl, Edelstahl oder PVC in jeglicher Größe und Art mit den dazugehörigen Lötfittings und Formteilen enthalten.

Als Fräs- oder Schnittarten der Natursteinplatte des Natursteinplattenelement 2 kommen insbesondere, aber nicht beschränkend, in Frage:
- bivalar
- mäanderförmig
- komplette Fläche ausgefräst bzw. Teilflächen ausgefräst
Die Verlegeformen oder -arten Komponenten des Heizsystems 3, wie beispielsweise Rohre, Heizelemente, Warm- oder Heizwasserträger und sonstige Wärmeträger enthalten insbesondere folgende Versionen:
- bivalar
- mäanderförmig
- komplette Wärmeträgerplatte
- Registerverlegung

Die Gussmasse 6 kann beispielsweise durch Ausschlämmen der Ausnehmung(en) 5 in dem Natursteinplattenelement 2 mit einer Klebmasse oder einer Spachtelmasse oder mit sonstigem Füllmaterial eingebracht werden. Die Bezeichnung "Gussmasse" soll im Rahmen der vorliegenden Unterlagen keine Beschränkung auf eine Verarbeitung oder Anwendung ausschließlich durch Gießen bedeuten. Vielmehr kann die entsprechende Masse auch in die Ausnehmung(en) 5 gepresst oder gestrichen werden. Auch sind Prozesse, wie Wärmehärten, Schmelzen, Sintern usw. als Behandlungen und Nachbehandlungen der Gussmasse 6 je nach Material und Anforderungen möglich.

Ein Anschluss an Heizungsversorgungsleitungen (nicht gezeigt) ist an allen Stellen des Natursteinheizkörpers 1 möglich. Weiterhin ist es bevorzugt, wenn das Heizrohrsystem Zuleitungsund Ableitungsanschlüsse (nicht gezeigt) für ein Wärmeträgerfluid und/oder Zuleitungssteuer- und/oder -regeleinrichtungen (nicht gezeigt) aufweist, die selbst Wärmesensoren (nicht gezeigt) enthalten können oder denen Wärmesensoren an oder in dem Natursteinplattenelement 2 oder in einem Abstand davon zugeordnet sind. Insbesondere Wärmesensoren an oder in dem Natursteinplattenelement 2 ermöglichen eine Berücksichtigung der Wärmekapazität, Restwärme und dergleichen des Natursteinplattenelementes 2 und somit eine effiziente Heizsteuerung und/oder -regelung.

Bezüglich verwendeter Rohre 4 wird lediglich exemplarisch auf die Produktspezifikationen, einschließlich Herstellungsverfahren in der Broschüre CUPROKLIMA ®, "Qualitätsstandard für lagengespulte ACR-Kupferrohre", 09.03, der Firma Wieland-Werke AG, D-89079 Ulm Bezug genommen. Zur Vermeidung der bloßen Wiedergabe dieser vollständigen Broschüre ist deren gesamter Inhalt hiermit durch Bezugnahme in den vorliegenden Unterlagen aufgenommen. Bei den in dieser druckschriftlichen Veröffentlichung enthaltenen konkreten physikalischen und Materialangaben handelt es sich um solche für einzelne Ausführungsbeispiele. Diese physikalischen und Materialangaben bestimmen neben den jeweils konkreten Ausgestaltungsmöglichkeiten auch grundsätzliche Arten von Varianten und Versionen mit ähnlichen oder vergleichbaren Wirkungen.

Bevorzugt, aber nicht ausschließlich, enthält das Heizsystem 3 Rotguss- und/oder Kupferfittings für Biegungen und Abzweigungen im Verlauf des Rohres 4 insbesondere in der Ausgestaltung als Lötfittings. Vorzugsweise genügen diese Fittings den Spezifikationen, wie sie insbesondere in dem Prospekt "Technischen Katalog", 07/01 von Bänninger, Firma International Building Products GmbH, D-35394 Gießen, offenbart sind. Zur Vermeidung der bloßen Wiedergabe dieses vollständigen Prospektes ist dessen gesamter Inhalt hiermit durch Bezugnahme in den vorliegenden Unterlagen aufgenommen. Die Fittings, die für die vorliegende Erfindung mit Vorzug verwendet werden, können dabei entweder direkt die in diesem Prospekt angegebenen Produkte sein, oder Produkte, den dieselben Spezifikationen oder gleichwirkenden Merkmale erfüllen.

Insbesondere bevorzugt sind Lötfittings aus Kupfer nach
DIN EN 1254 - Teil 1. Speziell bevorzugt sind dabei ein Werkstoff Cu-DHP mit der Werkstoffnummer CW024A nach DIN EN 1412 (alte Bezeichnung nach DIN 1787: SF-Cu, Werkstoffnummer 2.0090). Dabei gilt für die chemische Zusammensetzung beispielsweise annähernd oder zumindest ungefähr ein Minimum von 99,90 % Cu und 0,015 - 0,040 % P.

Bei Rotguss-Lötfittings werden solche nach DIN EN 1254 - 1 bevorzugt (früher DIN 2856). Lediglich der Vollständigkeit halber werden noch Gewindefittings aus Rotguss mit Baumaßen analog DIN 2950 (Temperguss) und einer Rotguß-Legierung nach DIN 17656 genannt. Vorzugsweise Zusammensetzungen liegen etwa in den nachfolgenden Bereichen oder bei den nachfolgenden Werten:

| | |
|---|---|
| Sn (Zinn) | 3,8 - 4,5 % |
| Pb (Blei) | 2,0 - 3,0 % |
| Zn (Zink) | 5,5 - 6,5 % |
| Ni (Nickel) | 0,3 - 0,6 % |
| Sb | max. 0,1 % |
| Fe | max. 0,3 % |
| Sonstige | max. 0,25 % |
| Cu (Kupfer) | Rest |

Bei den vorstehenden konkreten physikalischen und Materialangaben handelt es sich um solche für einzelne Ausführungsbeispiele. Diese physikalischen und Materialangaben bestimmen neben den jeweils konkreten Ausgestaltungsmöglichkeiten auch grundsätzliche Klassen von Varianten und Versionen mit ähnlichen oder vergleichbaren Wirkungen.

Zur näheren, aber auch nur beispielsweisen Spezifizierung von vorzugsweise verwendeter Gussmasse 6 wird hiermit auf die Produktdatenblätter 3.22 (03/03) und 3.31 (02/03) der Firma Schönex GmbH, D-48713 Rosendahl, Bezug genommen und werden diese Produktdatenblätter zur Vermeidung deren vollständigen bloßen Wiedergabe vollinhaltlich hiermit durch Bezugnahme in den vorliegenden Unterlagen aufgenommen. Damit sind bevorzugte Gussmassen 6 in Form von Glätt- und vor allem Nivelliermassen (Produktdatenblatt 3.22) sowie selbstverlaufende Kunstharz-Zement-Ausgleichsmörtel (Produktdatenblatt 3.31) ausreichend bestimmt. Die in den hierin durch Bezugnahme vollumfänglich aufgenommenen Produktdatenblätter enthaltenen konkreten physikalischen und Materialangaben betreffen bevorzugte Ausführungsbeispiel der vorliegenden Erfindung. Diese physikalischen und Materialangaben bestimmen neben den jeweils konkreten Ausgestaltungsmöglichkeiten auch grundsätzliche Gattungen von Varianten und Versionen mit ähnlichen oder vergleichbaren Wirkungen.

Die vorstehend durch Bezugnahme vollständig in die vorliegenden Unterlagen aufgenommenen Veröffentlichungen betreffend Rohre, Fittings und Gusmassen sind einerseits exemplarisch zu verstehen, indem sich daraus konkrete Ausgestaltungsmöglichkeiten ergeben, die auch mit gutem bis hervorragendem Erfolg getestet wurden, und zeigen andererseits dem Fachmann vorteilhafte oder relevante Größen und deren Werte- oder Bestimmungsbereiche auf, so dass sich dem Fachmann in für ihn verständlicher Weise mit und aus diesen weiteren Angaben ein weites Feld an Realisierungsmöglichkeiten mit zahlreichen Vorteilen eröffnet.

Die vorstehend angegebenen und erläuterten Merkmale und Merkmalskombinationen der Ausführungsbeispiele dienen lediglich der exemplarischen Verdeutlichung der Erfindung und nicht deren Beschränkung. Der Offenbarungsumfang der vorliegenden gesamten Unterlagen ist durch das bestimmt, was für den Fachmann ohne weiteres in den Ansprüchen, aber auch aus der Beschreibung und unter Einbeziehung seines Fachwissens entnehmbar ist und/oder verstanden wird. Insbesondere umfasst die Erfindung ferner alle Variationen, Modifikationen, Kombinationen und Substitutionen, die der Fachmann dem gesamten Offenbarungsumfang der vorliegenden Unterlagen entnehmen kann. Ferner sind insbesondere alle einzelnen Merkmale und Ausgestaltungsmöglichkeiten der Erfindung und ihrer Ausführungsbeispiele kombinierbar.

## Patentansprüche

1. Natursteinheizkörper mit wenigstens einem Natursteinplattenelement (2) und einem Heizrohrsystem (3), das mit dem Natursteinplattenelement (2) in Kontakt ist und durch das eine Heizflüssigkeit geleitet ist,
**dadurch gekennzeichnet,**
**dass** das Natursteinplattenelement (2) auf einer Seite (Rückseite 9) wenigstens eine nutartige oder flächige Ausnehmung (5) enthält, in der das Heizrohrsystem (3) zumindest teilweise aufgenommen ist.

2. Natursteinheizkörper nach Anspruch 1,
**dadurch gekennzeichnet,**
**dass** das Heizrohrsystem (3) über eine Gussmasse (6) mit dem Natursteinplattenelement (2) in Kontakt ist, und
**dass** vorzugsweise die Gussmasse (6) zumindest weitgehend und insbesondere vollständig ausgehärtet ist.

3. Natursteinheizkörper nach Anspruch 1 oder 2,
**dadurch gekennzeichnet,**
**dass** jede Ausnehmung (5) ein Schnitt oder eine Ausfräsung mit ausreichender Breite zur Aufnahme jeweils eines Rohres (4) des Heizrohrsystems (3) ist.

4. Natursteinheizkörper nach einem der vorhergehenden Ansprüche,
**dadurch gekennzeichnet,**
**dass** das Heizrohrsystem (3) wenigstens ein Rohr oder Rohrelement (4), das gerade oder gebogen, insbesondere einoder mehrfach S-förmig gebogen ist, oder eine Gitterstruktur aus einer Mehrzahl von Rohren (4) enthält, und/oder dass das Heizrohrsystem (3) wenigstens eine Fluidleitung enthält, die rohrartig ist und vorzugsweise zumindest im wesentlichen aus Kupfer, Stahl, Edelstahl oder PVC besteht, und/oder
**dass** das Heizrohrsystem (3) Zuleitungs- und Ableitungsanschlüsse für ein Wärmeträgerfluid und/oder Zuleitungssteuer- und/oder -regeleinrichtungen aufweist, und
**dass** vorzugsweise die Zuleitungssteuer- und/oder -regeleinrichtungen selbst Wärmesensoren enthalten, oder den Zuleitungssteuer- und/oder -regeleinrichtungen Wärmesensoren an oder in dem Natursteinplattenelement (2) oder in einem Abstand davon zugeordnet sind, und/oder
**dass** das Heizrohrsystem (3) wenigstens eine rohrartige Fluidleitung enthält, die zumindest im wesentlichen und bevorzugt vollständig innerhalb der Außenkontur des Natursteinplattenelementes (2) liegt.

5. Natursteinheizkörper nach einem der vorhergehenden Ansprüche,
**dadurch gekennzeichnet,**
**dass** jede Ausnehmung (5) von einer solchen Tiefe ist, dass die zugehörige rohrartige Fluidleitung zumindest im wesentlichen und insbesondere vollständig darin untergebracht ist, und/oder
**dass** jede Ausnehmung (5), ggf. jeder Schnitt oder jede Ausfräsung, zur Bildung von Hinterschneidungen (10) schräg ist oder eine entsprechende Querschnittsform aufweist, so dass die zugehörige rohrartige Fluidleitung zumindest teilweise hinter der Hinterschneidung (10) liegt.

6. Natursteinheizkörper nach einem der vorhergehenden Ansprüche,
**dadurch gekennzeichnet,**
**dass** ein Abdeckelement (8) enthalten ist, das auf der Seite (Rückseite 9) der wenigstens einen Ausnehmung (5) an dem Natursteinplattenelement (2) angeordnet ist, wobei das Abdeckelement (8) vorzugsweise
- aus Naturstein besteht,
- eine Wärmeisolierung enthält oder bildet, und/oder
- Befestigungseinrichtungen für seine Montage und/oder die Montage des Natursteinplattenelementes (2) an ihm aufweist.

7. Herstellungsverfahren für einen Natursteinheizkörper mit folgenden Schritten:
auf einer Seite (Rückseite 9) eines Natursteinplattenelementes (2) wird wenigstens eine Ausnehmung (5) eingebracht, ein Heizrohrsystem (3) wird zumindest teilweise in dieser wenigstens einen Ausnehmungen (5) untergebracht, und
vor oder nach dem Unterbringen des Heizrohrsystems (3) in der Ausnehmung (5) wird eine Gussmasse (6) in die Ausnehmung (5) gegeben.

8. Herstellungsverfahren für einen Natursteinheizkörper nach Anspruch 7,
**dadurch gekennzeichnet,**
**dass** jede Ausnehmung (5) durch Schneiden oder Fräsen auf der einen Seite (Rückseite 9) des Natursteinplattenelementes (2) hergestellt wird.

9. Herstellungsverfahren für einen Natursteinheizkörper nach Anspruch 7 oder 8,
**dadurch gekennzeichnet,**
**dass** ein Natursteinheizkörper (1) nach einem der Ansprüche 1 bis 6 hergestellt wird.
